Europäisches Patentamt

European Patent Office

Office européen des brevets

(19)

(11) Publication number : **0 414 558 B1**

(12) **EUROPEAN PATENT SPECIFICATION**

(45) Date of publication of patent specification :
09.03.94 Bulletin 94/10

(51) Int. Cl.[5] : **C04B 35/48,** C04B 35/66,
C04B 35/80

(21) Application number : **90309292.2**

(22) Date of filing : **23.08.90**

(54) **Zirconia lining materials for high temperature furnaces.**

(30) Priority : **24.08.89 JP 218166/89**

(43) Date of publication of application :
**27.02.91 Bulletin 91/09**

(45) Publication of the grant of the patent :
**09.03.94 Bulletin 94/10**

(84) Designated Contracting States :
**DE FR GB IT SE**

(56) References cited :
**US-A- 4 144 195
US-A- 4 151 693
PATENT ABSTRACTS OF JAPAN && JP-A-1
301561 (SHINAGAWA REFRACT CO LTD) 05
December 1989,
World Patents Index Accession Number 89-
300299(week 8843)Derwent Publications Ltd.
London, GB. & DD-A-257455 (VEB CHEM LEIP-
ZIG 04/02/1987)
World Patents Index Accession number
89-020540 (week 8903) Derwent Publications
LTD., London, GB & JP-A-2036547**

(73) Proprietor : **SHINAGAWA SHIRORENGA
KABUSHIKI KAISHA
2-1, Otemachi, 2-chome Chiyoda-ku
Tokyo 100 (JP)**

(72) Inventor : **Asami, Hajime
1931, Ibe
Bizen-Shi, Okayama-Ken (JP)**
Inventor : **Saeki, Tsuneoubu
1931, Ibe
Bizen-Shi, Okayama-Ken (JP)**
Inventor : **Asakura, Hiroyuki
1935-1, Ibe
Bizen-Shi, Okayama-Ken (JP)**

(74) Representative : **Kyle, Diana et al
Elkington and Fife Prospect House 8
Pembroke Road
Sevenoaks, Kent TN13 1XR (GB)**

## Description

The present invention relates to a refractory lining material for high temperature furnaces and, more particularly, to a zirconia, hollow lining material and a hollow lining material filled in its hollow interior with $ZrO_2$ fibers, refractory hollow balls and $ZrO_2$ fiber boards.

Zirconia or $ZrO_2$ has certain superior properties that other ceramics have not. For instance, it has a melting point as high as about 2715°C; has very low heat conductivity; has low electrical resistivity at high temperatures and high electrical resistivity at low temperatures; has excellent chemical stability so that it can never be wetted with basic and acidic slag; and exhibits a Mohs' hardness of 7 or higher.

By taking the advantage of such properties, zirconia has been used not only as polishing/abrasive materials, electronic materials, pigments for porcelain and ceramics, glass additives and materials for sensors but also as refractory molded materials.

For energy-saving, $Al_2O_3$-based fiber boards are now being generally used for electric furnaces for high-temperature purposes. Since its heat-withstanding temperature is ordinarily about 1700°C, however, there is no choice but to use basic or zirconia bricks where the temperature involved exceeds 1800°C. Such bricks increase the heat capacity of the furnace, require much energy for heating and are so susceptible to heat spalling that it is impossible to carry out rapid temperature rise or drop. A problem with zirconia fiber boards is that, due to the hot creep properties inherent in zirconia, difficulty is encountered in constructing ceiling boards of continuous length from them.

US-A-4 151 693 produces refractory insulating modules applicable as furnace lining materials, with the objective to improve failure of furnace linings at above 800°C and comprise a block with a hollow form having a front wall and side walls, the front face of the front wall is of lower density than the rear face of the front wall.

Thus, an object of the present invention is to provide a thermal insulating lining material which can be used at high temperatures exceeding 1800°C, is not subject to increased heat capacity and is resistant to heat spalling.

We have already invented a zirconia fiber molded part and a zirconia composite refractory and have filed patent applications (Japanese Patent Laid-open Publications Nos. 62(1987)-260780 and 63(1988)-297267) therefor. We have now found that the above object can be successfully achieved by improving on the zirconia material set forth therein.

## SUMMARY OF THE INVENTION

According to one aspect of the present invention, there is provided a zirconia lining material for high temperature furnaces, with a hollow interior and a skin layer comprising zirconia fibers and a zirconia powder and having a bulk specific gravity of 2.5 to 5.0.

According to another aspect of the present invention, there is provided a zirconia lining material for high temperature furnaces, with a hollow interior and a skin layer comprising zirconia fibers and a zirconia powder and having a bulk specific gravity of 2.5 to 5.0, the hollow interior being wholly or partly packed with one or more fillers selected from the group consisting of zirconia fibers, a refractory hollow ball and a zirconia fiber board.

## BRIEF DESCRIPTION OF THE DRAWINGS

The present invention will now be described in greater detail, by way of examples only with reference to the accompanying drawings, in which:

FIGS. 1 through 6 are perspective views in section of examples of embodiment of the lining material according to the present invention, and

FIG. 7 is a view illustrating a high temperature, furnace in which the lining material of the present invention is applied along with a zirconia heating element, by way of example.

## DETAILED DESCRIPTION OF THE INVENTION

The lining material of the present invention includes a skin layer comprising zirconia fibers and a zirconia powder and having a bulk specific gravity between 2.5 and 5.0.

As the zirconia fibers, use may be made of, in addition to pure zirconia fibers, zirconia fibers stabilized by various stabilizers such as lime (CaO), magnesia (MgO) and yttria ($Y_2O_3$). Particular preference is given to the yttria-stabilized zirconia fibers. The fibers' lengths and diameters are preferably between 0.1 and 50 mm and 1 and 20 μm, respectively.

The zirconia fibers can be prepared by any of various methods. For instance, a starting material (a spinning solution) consisting of an aqueous solution of a zirconium salt can be spun into a fiber precursor, which is in turn calcined at high temperatures. Depending upon the purpose, shape and other factors of zirconia refractories, suitable techniques can be selected.

The zirconia powder is essentially composed of zirconium oxide having a chemical formula of $ZrO_2$, and may contain a zirconium compound such as zirconium carbonate and zirconium hydroxide optionally with stabilizers such as $Y_2O_3$, MgO and CaO, depending upon the purpose.

Although not critical, the zirconia powder is of a constant particle size ordinarily of 0.1 to 1000 μm, preferably 0.5 to 500 μm. Alternatively, the zirconia powders used may be a mixture of particles of coarse and fine particle size.

Referring to the fiber/powder mixing ratio, 100 parts by weight of the zirconia powders are mixed with 5 to 200 parts by weight, preferably 10 to 100 parts by weight, of the zirconia fibers.

The powder/fiber mixture may additionally contain various additives such as binders, pore-making agents, surfactants, dispersants and flocculants. The binders used, for instance, may include a synthetic high-molecular material such as polyethylene oxide, a cellulose derivative such as methyl cellulose, starch or its derivatives and a viscous material of animal and plant origins such as pectin as well as zirconia sol and an aqueous solution of a zirconium salt. The zirconia sol and the aqueous solution of a zirconium salt are preferably used in an amount of 2 to 30 parts by weight per a total amount of 100 parts by weight of the zirconia fibers and powders.

The pore-making agent is added to save the weight of formed parts. To this end, organic balls such as styrolfoam beads or various fibers can be used in an amount of 5 to 100 parts by weight per the aforesaid total amount of 100 parts by weight.

The zirconia fiber/powder mixture is well-kneaded together with various additives, if required, then molded into a suitable shape such that a skin layer with a hollow interior is formed, and finally calcined. Ordinarily, a thickness between 2 mm and 10 mm is selected. For forming, various processes such as casting, uniaxial pressing, isotactic pressing and extrusion can be used as described hereinafter, but preference is given to extrusion with an auger machine in view of efficiency. The shape to be formed will be described later. Preferably, the calcining temperature is between 1800°C and 2200°C. At a temperature below 1800°C, the calcined parts would be deformed in use, whereas at a temperature exceeding 2200°C, over-sintering would occur, so that the parts being sintered are susceptible to deformation.

The skin layer is required to have a certain density in order that it will withstand its own weight and the load of a lining material placed above, and that, in particular, hot-creep deformation will be limited to such an extent that no practical problem will arise. As a result of various experiments, it has now been found that a composite material having a bulk specific gravity of 2.5 to 5.0 $g/cm^3$ is suitable as the material sought in the present invention. However, if this composite material is formed into a solid rod or flat sheet, then its thermal insulating property will become unsatisfactory after lining.

The area of the hollow part relative to the sectional area of the formed material can be varied depending upon where the lining is applied. For instance, it appears to be preferable that the proportion of area occupied by the hollow part be about 50 to 70% for ceiling boards with a view to reducing weight and 50% or lower for materials for the lower parts of side walls and floors for preventing their deformation due to loads.

The thus obtained lining material of the present invention can be used not only for ordinary work linings but also for partition walls for the outer and inner furnace parts of a double structure type of furnace including a preheater, for instance, a high temperature-purpose electrical furnace including a $ZrO_2$ heating element.

The partition walls are required to have a suitable heat conductivity higher than required for ordinary work linings and are made as thin yet strong as possible, thereby making the furnace compact. Thus, the lining material of the present invention is advantageously applied to such partition walls.

The lining material with such a skin layer and a hollow part therewithin may be used by itself as already described. However, its thermal insulating property can be further improved by packing that hollow part with one or more fillers selected from the group consisting of a zirconia fiber, refractory hollow balls and a zirconia fiber board. The packing density can then be adjusted by regulating the manner in which the fibers are packed or the grain size of the hollow balls.

The zirconia fibers used may be the same as those already mentioned, but should be packed to a density of 2.0 or below. At higher than 2.0, they are likely to be deformed due to their own weight.

As the hollow balls, use may be made of those of oxides such as $ZrO_2$, MgO, $Y_2O_3$ and $CeO_2$, all having a melting point of 2000°C or higher. However, they should again be packed at a density of 2.0 or lower. Having a size between 1 mm and 10 mm, a thickness between 0.01 mm and 0.2 mm and a specific gravity between 0.2 and 1.5, these hollow balls are ordinarily fabricated in the following manner.

For instance, a spherical combustible material such as a styrolfoam ball having a diameter of a few millimeters is used as a nucleus material. Next, the nucleus material is coated on its surface with a powder of a refractory material such as zirconia and magnesia through a binder such as an aqueous solution of polyvinyl alcohol. The coated material is then heated and calcined at a high temperature to thermally decompose the nucleus material, thereby forming a refractory hollow ball.

The zirconia fiber board is ordinarily made by suspending in water, an alcohol or the like such zirconia fibers as described above and a binder comprising its crystal stabilizer or a precursor capable of being converted to this stabilizer by heating and making a board from the resulting suspension. The board is then dried and calcined.

The binder, ordinarily having a particle size of 0.1 $\mu$m to 0.3 mm, is at least one crystal stabilizer or its precursor selected from the group consisting of oxides, carbonates, basic carbonates, acetates, oxalates, nitrates, chlorides and sulfates of magnesium, yttrium, calcium, samarium, cadmium, lanthanum and neodymium.

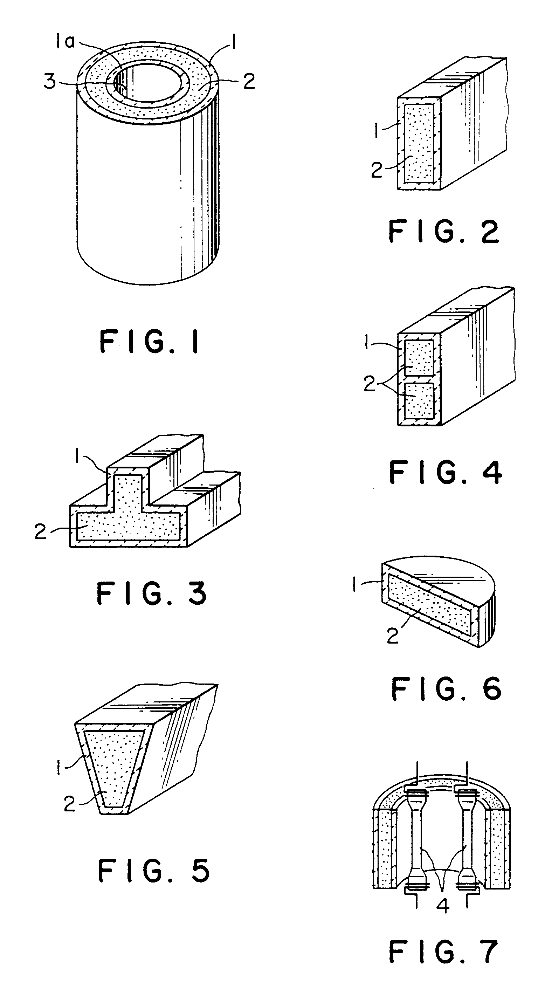

One or more fillers selected from the group consisting of such zirconia fibers, refractory hollow balls and zirconia fiber boards is or are wholly or partly packed in the hollow part defined by the skin layer formed in the above described manner, as illustrated in FIGS. 1 through 6. FIG. 1 shows a cylindrical material with a filler 2 packed between outer and inner skin layers 1 and 1a. The interior 3 of the inner skin layer 1a remains hollow. As viewed from the outer skin layer 1, this cylindrical material is shown to be partly packed inside. FIGS. 2 through 5 show columnar lining materials of rectangular, Tee, double-rectangular, and trapezoidal shapes in cross section, respectively, with each skin layer 1 packed therein with a filler 2. FIG. 6 illustrates a lining material in semi-disc form and of a rectangular shape in section with the skin layer packed therein with a filler 2. FIG. 7 illustrates a high temperature furnace constructed from the lining material of FIG. 1 in which furnace a zirconia heating element is used. Reference numeral 4 designates the zirconia heating element.

The present invention will now be described more fully with respect to the following specific examples and comparative examples as well as the results of tests carried out in regard thereto.

## Example 1

(a) Fifty (50) parts by weight of yttria-stabilized zirconia powder (consisting of 7% of $Y_2O_3$ and 93% of $ZrO_2$) having a mean particle size of 1 to 0.3 mm, 50 parts by weight of 0.3 mm yttria-stabilized zirconia powder, 100 parts by weight of yttria-stabilized zirconia fibers (made by Shinagawa Refractories Co., Ltd.) having a mean diameter of 5 $\mu$m and a mean length of 20 to 30 mm, 5 parts by weight of methyl cellulose and 70 parts by weight of water were blended together. The blend was extruded through an extruding machine into a 4-mm thick, hollow, rectangular pipe 1 of 25 x 50 mm cross section as shown in FIGS. 2. This pipe 1 was dried at 100°C for 2 hours and then calcined at 1800°C. The pipe thus obtained had a bulk specific gravity of 3.5. The results obtained by using this pipe as it was are set forth in Table 1.

(b) This pipe was packed to a packing bulk ratio of 1.4 with hollow zirconia balls, each having a skin of 0.2 mm in thickness and a particle size of 1 mm.

(c) Yttria-stabilized zirconia fibers (having the same diameter and length as mentioned above) were forced and packed into the pipe to a bulk specific gravity of 1.5.

(d) Into the pipe was inserted a zirconia fiber board having a bulk specific gravity of 1.5, which was prepared in the following manner according to Example 1 of the aforesaid Japanese Patent Laid-open Publication No. 62-260780.

One hundred (100) parts by weight of 100% zirconia fibers (made by Shinagawa Refractories Co., Ltd.) having a mean diameter of 5 $\mu$m and a mean length of 20 to 30 mm was added to 10 parts by weight of magnesium carbonate powder having a mean particle size of 1 to 5 $\mu$m in a medium consisting of water, thereby preparing a suspension for board-making.

A board was formed from this suspension by a board-making process. After forming, the board was dried at 100°C for 24 hours and then calcined at 1600°C to obtain a zirconia fiber board.

(e) Each of the pipe samples was installed as lining on the inner walls of an electrical furnace (with a heating element: molybdenum disilicide) to be operated at a temperature of 1800°C and an electrical furnace (with a heating element: a zirconia heating element made by Shinagawa Refractories Co., Ltd.) to be operated at 2000°C to investigate its service life. The results are set forth in Table 1.

## Comparative Example 1

The rectangular pipe of Example 1 was formed into a solid, not hollow, (square column) shape at the same bulk specific gravity of 3.5. A square column material having a bulk specific gravity of 2.0 was also prepared. The results are given in Table 1.

TABLE 1

| | Examples | | | | Comparative Example | |
|---|---|---|---|---|---|---|
| | Hollow (a) | Packed with hollow $ZrO_2$ balls (b) | Packed with $ZrO_2$ fibers (c) | Fitted with fiber board (d) | Bulk specific gravity 3.5 | Bulk specific gravity 2.0 |
| Results of lining tests in electrical furnace of 1800°C | | | | | | |
| Service life cycles | $\geqq 100$ | $\geqq 100$ | $\geqq 100$ | $\geqq 100$ | Ceiling fell at 10th cycle | Ceiling fell at 15th cycle |
| Condition of ceiling (after five cycles) | Normal | " | " | " | Deflective deformation occurred | " |

EP 0 414 558 B1

TABLE 1 (continued)

| | Examples | | | | Comparative Example | |
|---|---|---|---|---|---|---|
| | Hollow (a) | Packed with hollow ZrO$_2$ balls (b) | Packed with ZrO$_2$ fibers (c) | Fitted with fiber board (d) | Bulk specific gravity 3.5 | Bulk specific gravity 2.0 |
| Results of lining tests in electrical furnace of 2000°C | | | | | | |
| Service life cycles | ≧50 | ≧50 | ≧50 | ≧50 | Deflective deformation occurred at 3rd cycle | Deflective deformation occurred at 4th cycle |
| Condition of ceiling (after five cycles) | No practical problem arose, although fine cracking occurred | " | " | Normal | Cracking occurred | " |

EP 0 414 558 B1

The present invention provides a zirconia lining material with a hollow interior and a skin layer comprising zirconia fibers and a zirconia powder and having a bulk specific gravity of 2.5 to 5.0, the hollow interior being not or wholly or partly packed with a filler or fillers selected from the group consisting of zirconia fibers, refractory hollow balls and a zirconia fiber board, which lining material has improved resistance to heat spalling. The present lining material can withstand long-term use and so is best suited as ceiling boards of high temperature furnaces and for lining high temperature furnaces.

## Claims

1. A zirconia lining material for high temperature furnaces with a hollow interior and a skin layer comprising zirconia fibers and a zirconia powder and having a bulk specific gravity of 2.5 to 5.0 g/cm$^3$.

2. The lining material of Claim 1, wherein the zirconia fibers and zirconia powder used are pure zirconia or zirconia stabilized with a stabilizer selected from the group consisting of lime, magnesia and yttria.

3. The lining material of Claim 1, wherein the zirconia fibers, have a length of 0.1 to 50 mm and a diameter of 1 to 20 $\mu$m, and the zirconia powder has a particle diameter of 0.1 to 1000 $\mu$m.

4. The lining material of Claim 1, wherein 100 parts by weight of the zirconia powder is used with 5 to 200 parts by weight of the zirconia fibers.

5. The lining material of Claim 1, which further contains one or more additives selected from the group consisting of a binder, a pore-making agent, a surfactant, a dispersant and flocculant.

6. A zirconia lining material for high temperature furnaces, with a hollow interior and a skin layer comprising zirconia fibers and a zirconia powder and having a bulk specific gravity of 12.5 to 5.0 g/cm$^3$, said hollow interior being wholly or partly packed with one or more fillers selected from the group consisting of zirconia fibers, refractory hollow balls and a zirconia fiber board.

7. The lining material of Claim 6, wherein the zirconia fibers and zirconia powder used are pure zirconia or zirconia stabilized with a stabilizer selected from the group consisting of lime, magnesia and yettria.

8. The lining material of Claim 6, wherein the zirconia fibers have a length of 0.1 to 50 mm and a diameter of 1 to 20 $\mu$m, and the zirconia powder has a particle diameter of 0.1 to 1000 $\mu$m.

9. The lining material of Claim 6, wherein 100 parts by weight of the zirconia powder is used with 5 to 200 parts by weight of the zirconia fibers.

10. The lining material of Claim 6, which further contains one or more additives selected from the group consisting of a binder, a pore-making agent, a surfactant, a dispersant and a flocculant.

11. The lining material of Claim 6, wherein the refractory hollow balls are formed from one or more oxides selected from the group consisting of $ZrO_2$, $MgO$, $Y_2O_3$ and $CeO_2$.

12. The lining material of Claim 6, wherein the filler or fillers is or are packed with a packing density of 2.0 or lower.

## Patentansprüche

1. Zirconiumdioxid-Auskleidungsmaterial für Hochtemperaturöfen mit einem hohlen Innenraum und einer Mantelschicht, dadurch **gekennzeichnet,** daß es Zirconiumdioxidfasern und ein Zirconiumdioxidpulver enthält und ein Raumgewicht von 2,5 bis 5,0 g/cm$^3$ besitzt.

2. Auskleidungsmaterial nach Anspruch 1, dadurch **gekennzeichnet,** daß die verwendeten Zirconiumdioxidfasern und das verwendete Zirconiumdioxidpulver reines Zirconiumdioxid oder mit einem Stabilisator, ausgewählt aus der Gruppe bestehend aus Kalk, Magnesiumoxid und Yttriumoxid, stabilisiertes Zirconiumdioxid sind.

3. Auskleidungsmaterial nach Anspruch 1, dadurch **gekennzeichnet,** daß die Zirconiumdioxidfasern eine Länge von 0,1 bis 50 mm und einen Durchmesser von 1 bis 20 μm besitzen und das Zirconiumdioxidpulver einen Teilchendurchmesser von 0,1 bis 1000 μm besitzt.

4. Auskleidungsmaterial nach Anspruch 1, dadurch **gekennzeichnet,** daß auf 100 Gewichtsteile des Zirconiumdioxidpulvers 5 bis 200 Gewichtsteile der Zirconiumdioxidfasern eingesetzt werden.

5. Auskleidungsmaterial nach Anspruch 1, dadurch **gekennzeichnet,** daß es weiterhin einen oder mehrere Zusatzstoffe, ausgewählt aus der Gruppe bestehend aus einem Bindemittel, einem Mittel zur Erzeugung von Poren, einem grenzflächenaktiven Mittel, einem Dispergierungsmittel und einem Flockungsmittel, enthält.

6. Zirconiumdioxid-Auskleidungsmaterial für Hochtemperaturöfen mit einem hohlen Innenraum und einer Mantelschicht, dadurch **gekennzeichnet,** daß es Zirconiumdioxidfasern und ein Zirconiumdioxidpulver enthält und ein Raumgewicht von 2,5 bis 5,0 g/cm³ besitzt, wobei der hohle Innenraum ganz oder teilweise mit einem oder mehreren Füllstoffen, ausgewählt aus der Gruppe bestehend aus Zirconiumdioxidfasern, feuerfesten Hohlkugeln und einer Zirconiumdioxidfaserplatte, gepackt ist.

7. Auskleidungsmaterial nach Anspruch 6, dadurch **gekennzeichnet,** daß die verwendeten Zirconiumdioxidfasern und das verwendete Zirconiumdioxidpulver reines Zirconiumdioxid oder mit einem Stabilisator, ausgewählt aus der Gruppe bestehend aus Kalk, Magnesiumoxid und Yttriumoxid, stabilisiertes Zirconiumdioxid sind.

8. Auskleidungsmaterial nach Anspruch 6, dadurch **gekennzeichnet,** daß die Zirconiumdioxidfasern eine Länge von 0,1 bis 50 mm und einen Durchmesser von 1 bis 20 μm besitzen und das Zirconiumdioxidpulver einen Teilchendurchmesser von 0,1 bis 1000 μm besitzt.

9. Auskleidungsmaterial nach Anspruch 6, dadurch **gekennzeichnet,** daß auf 100 Gewichtsteile des Zirconiumdioxidpulvers 5 bis 200 Gewichtsteile der Zirconiumdioxidfasern eingesetzt werden.

10. Auskleidungsmaterial nach Anspruch 6, dadurch **gekennzeichnet,** daß es weiterhin einen oder mehrere Zusatzstoffe, ausgewählt aus der Gruppe bestehend aus einem Bindemittel, einem Mittel zur Erzeugung von Poren, einem grenzflächenaktiven Mittel, einem Dispergierungsmittel und einem Flockungsmittel, enthält.

11. Auskleidungsmaterial nach Anspruch 6, dadurch **gekennzeichnet,** daß die feuerfesten Hohlkugeln aus einem oder mehreren Oxiden, ausgewählt aus der Gruppe bestehend aus $ZrO_2$, $MgO$, $Y_2O_3$ und $CeO_2$, gebildet sind.

12. Auskleidungsmaterial nach Anspruch 6, dadurch **gekennzeichnet,** daß der Füllstoff oder die Füllstoffe mit einer Packungsdichte von 2,0 oder weniger gepackt ist bzw. sind.

**Revendications**

1. Matériau de revêtement de zircone pour fours à haute température ayant un intérieur creux et une couche de peau comprenant des fibres de zircone et une poudre de zircone et ayant une masse spécifique apparente de 2,5 à 5,0 g/cm³.

2. Matériau de revêtement selon la revendication 1, dans lequel les fibres de zircone et la poudre de zircone utlisées sont de la zircone pure ou de la zircone stabilisée par un stabilisant choisi dans le groupe comprenant la chaux, la magnésie et l'yttria.

3. Matériau de revêtement selon la revendication 1, dans lequel les fibres de zircone ont une longueur de 0,1 à 50 mm et un diamètre de 1 à 20 μm, et la poudre de zircone a un diamètre de particule de 0,1 à 1000 μm.

4. Matériau de revêtement selon la revendication 1, dans lequel on utilise 100 parties en poids de la poudre de zircone avec 5 à 200 parties en poids des fibres de zircone.

5. Matériau de revêtement selon la revendication 1, qui contient, en outre, un ou plusieurs additifs choisis parmi un liant, un agent porogène, un agent tensio-actif, un dispersant et un floculant.

6. Matériau de revêtement de zircone pour fours à haute température ayant un intérieur creux et une couche de peau comprenant des fibres de zircone et une poudre de zircone et ayant une masse spécifique apparente de 2,5 à 5,0 g/cm³, cet intérieur creux étant rempli totalement ou partiellement d'une ou plusieurs charges choisies parmi les fibres de zircone, les perles creuses réfractaires et un panneau de fibres de zircone.

7. Matériau de revêtement selon la revendication 6, dans lequel les fibres de zircone et la poudre de zircone utilisées sont de la zircone pure ou de la zircone stabilisée par un stabilisant choisi parmi la chaux, la magnésie et l'yttria.

8. Matériau de revêtement selon la revendication 6, dans lequel les fibres de zircone ont une longueur de 0,1 à 50 mm et un diamètre de 1 à 20 $\mu$m, et la poudre de zircone a un diamètre de particule de 0,1 à 1000 $\mu$m.

9. Matériau de revêtement selon la revendication 6, dans lequel on utilise 100 parties en poids de la poudre de zircone avec 5 à 200 parties en poids des fibres de zircone.

10. Matériau de revêtement selon la revendication 6, qui contient, en outre, un ou plusieurs additifs choisis parmi un liant, un agent porogène, un agent tensio-actif, un dispersant et un floculant.

11. Matériau de revêtement selon la revendication 6, dans lequel les perles creuses réfractaires sont formées à partir d'un ou plusieurs oxydes choisis parmi $ZrO_2$, $MgO$, $Y_2O_3$ et $CeO_2$.

12. Matériau de revêtement selon la revendication 6, dans lequel la ou les charges sont tassées avec une densité de tassement de 2,0 ou moins.

FIG. 1

FIG. 2

FIG. 3

FIG. 4

FIG. 5

FIG. 6

FIG. 7